# EUROPEAN PATENT APPLICATION

(11) **EP 0 982 361 A1**
(43) Date of publication of application: **01.03.2000**
(21) Application number: 99907926.2
(22) Date of filing: 15.03.1999
(51) Int. Cl.: C08L 23/00, C08L 53/00, C08K 3/22

(54) **FLAME-RETARDANT RESIN COMPOSITION**

(30) Priority: 23.03.1998 JP 7394698; 17.06.1998 JP 16941398
(71) Applicant: Kuraray Co., Ltd., Okayama 710-8622 (JP)
(72) Inventor: MAEKAWA, Kazuhiko, Kuraray Co., Ltd., Kurashiki-shi, Okayama 710-0801 (JP)
(74) Representative: VOSSIUS & PARTNER
(86) International application number: JP9901242
(87) International publication number: WO9948971

(57) **Abstract**

A flame-retardant resin composition comprising 100 parts by weight of a polyolefinic resin, from 50 to 300 parts by weight of aluminium hydroxide and/or magnesium hydroxide, and from 0.1 to 100 parts by weight of a block copolymer composed of polymer blocks containing from 50 to 100 mol% of olefinic monomer units and polymer blocks containing from 0.1 to 100 mol% of vinylic monomer units having at least one functional group selected from a carboxyl group, an epoxy group, a hydroxyl group, a carboxylic anhydride group, and a group of the following general formula:

-Si-R¹(R²)(R³)

wherein R¹, R² and R³ each represent a halogen atom, a vinyl group, an alkyl group or an alkoxyl group,
has the advantages of good melt moldability, good flame retardancy and good mechanical properties. The flame-retardant materials as obtained by melt-molding the flame-retardant resin composition have many applications requiring flame retardancy, and are favorably used as cable coating materials, electric insulators, constructional gaskets, constructional partitions, floors, walls, car parts, etc.

## Description

### TECHNICAL FIELD

The present invention relates to a flame-retardant resin composition comprising a polyolefinic resin, aluminium hydroxide and/or magnesium hydroxide, and a specific block copolymer, and also to flame-retardant materials as produced by molding the flame-retardant resin composition in melt.

### BACKGROUND OF THE INVENTION

For safety from fire, flame-retardant polyolefinic resins which, when fired, do not smoke much and do not produce poisonous gases such as hydrogen halide gases and others are desired these days. In that situation, flame-retardant polyolefinic resin compositions containing a non-halogen flame retardant have been being developed in the art. For example, tried is a method of adding aluminium hydroxide or magnesium hydroxide to polyolefinic resins so as to make the resins resistant to flames. In the method, however, the resins could not be satisfactorily resistant to flames if a large amount of the flame retardant is not added thereto. What is more, the mechanical properties of the resin compositions containing such a large amount of the flame retardant are greatly worsened. Accordingly, another method has been proposed of adding an ethylenic polymer that contains maleic anhydride as the constituent component, to the resin compositions so as to improve the mechanical properties such as the abrasion resistance, the scratch resistance, the whitening resistance on bending and others of the resin compositions (see Japanese Patent Laid-Open No. 117452/1993).

Resin compositions of a polyolefinic resin containing a large amount of aluminium hydroxide or magnesium hydroxide are problematic in that their mechanical properties are not good and, in addition, their melt moldability is extremely poor. Even if an ethylenic polymer containing maleic anhydride as the constituent component is added thereto as previously, the melt moldability of the resin compositions is still poor and the tensile elongation of the resin moldings is low, as will be demonstrated in Comparative Examples to be mentioned hereinunder.

The object of the present invention is to provide a flame-retardant resin composition having good melt moldability and good mechanical properties and capable of being well resistant to flames, and to provide flame-retardant materials as produced by molding the flame-retardant resin composition in melt.

### DISCLOSURE OF THE INVENTION

The invention provides a flame-retardant resin composition comprising 100 parts by weight of (I) a polyolefinic resin, from 50 to 300 parts by weight of (II) aluminium hydroxide and/or magnesium hydroxide, and from 0.1 to 100 parts by weight of (III) a block copolymer composed of (A) polymer blocks comprising from 50 to 100 mol% units of an olefinic monomer and from 0 to 50 mol% units of a vinylic monomer capable of copolymerizing with the olefinic monomer, and (B) polymer blocks comprising from 0.1 to 100 mol% units of a vinylic monomer having at least one functional group selected from a carboxyl group, an epoxy group, a hydroxyl group, a carboxylic anhydride group, and a group of the following general formula (1): 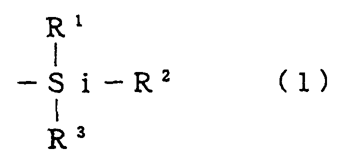 wherein R¹, R² and R³ each represent a halogen atom, a vinyl group, an alkyl group or an alkoxyl group, and from 0 to 99.9 mol% units of a vinylic monomer capable of copolymerizing with the functional group-having vinylic monomer. The invention also provides flame-retardant materials as produced by molding the flame-retardant resin composition in melt.

### BEST MODES OF CARRYING OUT THE INVENTION

The polyolefinic resin (I) for use in the invention includes, for example, very-low-density polyethylene, low-density polyethylene, medium-density polyethylene, high-density polyethylene, polypropylene, ethylene-α-olefin copolymers (in which the α-olefin includes propylene, 1-butene, 1-pentene, 1-hexene, 4-methyl-1-pentene, 1-octene, 1-decene, etc.), propylene-α-olefin copolymers (in which the α-olefin includes 1-butene, 1-pentene, 1-hexene, 4-methyl-1-pentene, 1-octene, 1-decene, etc.), ethylene-propylene-diene terpolymers (in which the diene compound includes linear non-conjugated dienes such as 1,4-hexadiene, 1,6-octadiene, 2-methyl-1,5-hexadiene, 6-methyl-1,6-heptadiene, 7-methyl-1,6-octadiene; cyclic non-conjugated dienes such as cyclohexadiene, dicyclopentadiene, methyltetrahydroindene, 5-vinylnorbornene, 5-ethylidene-2-norbornene, 5-methylene-2-norbornene, 5-isopropylidene-2-norbornene, 6-chloromethyl-5-isopropenyl-2-norbornene; and trienes such as 2,3-diisopropylidene-5-norbornene, 2-ethylidene-3-isopropylidene-5-norbornene, 2-propenyl-2,2-norbornadiene, 1,3,7-octatriene, 1,4,9-decatriene), ethylene-vinyl acetate copolymers, ethylene-ethyl acrylate copolymers, ethylene-methyl acrylate copolymers, etc. One or more of these resins can be used for (I). Of those, preferred are very-low-density polyethylene, low-density polyethylene, polypropylene, ethylene-α-olefin copolymers, propylene-α-olefin copolymers, ethylene-vinyl acetate copolymers, ethylene-ethyl acrylate copolymers, and ethylene-methyl acrylate copolymers.

Aluminium hydroxide and magnesium hydroxide for use in the invention may be in any form of, for example, powdery, tabular or needle-like grains, but are preferably in the form of powdery grains. More preferably, the grains have a mean grain size of from 0.05 µ to 200 µ, even more preferably from 0.1 µ to 100 µ.

The block copolymer (III) for use in the invention is composed of polymer blocks (A) and polymer blocks (B) which will be described hereinunder. For example, it includes AB-type diblock copolymers, ABA-type triblock copolymers, BAB-type triblock copolymers, etc. Of those, preferred are AB-type diblock copolymers.

The polymer blocks (A) constituting the block copolymer (III) for use in the invention comprise from 50 to 100 mol%, preferably from 70 to 100 mol%, more preferably from 80 to 100 mol%, relative to all structural units constituting the polymer blocks (A), of olefinic monomer units. The olefinic monomer units include, for example, units derived from ethylene, propylene, 1-butene, 2-methyl-1-butene, 3-methyl-1-butene, 2-butene, isobutylene, butadiene, isoprene, pentene, 4-methyl-1-pentene, 1-hexene, 1-octene, 1-decene, 1-octadecene, vinylcyclohexane, cyclopentadiene, β-pinene, etc. The olefinic monomer units constituting the polymer blocks (A) may be from one or more of these olefinic monomers. Of those, preferred are the units derived from ethylene, propylene, isobutylene and isoprene. For the units derived from conjugated dienes, the remaining unsaturated bonds in them may be hydrogenated.

The polymer blocks (A) may optionally contain units of a vinylic monomer capable of copolymerizing with the olefinic monomer noted above, in a ratio of from 0 to 50 mol%, preferably from 0 to 30 mol%, more preferably from 0 to 20 mol%. Units of the vinylic monomer capable of copolymerizing with the olefinic monomer as above include, for example, those derived from styrenic monomers such as styrene, p-styrenesulfonic acid and its sodium salts and potassium salts, etc.; (meth)acrylonitriles; vinyl esters such as vinyl acetate, vinyl pivalate, etc.; (meth)acrylates such as methyl (meth)acrylate, ethyl (meth)acrylate, butyl (meth)acrylate, dodecyl (meth)acrylate, 2-ethylhexyl (meth)acrylate, etc.; (meth)acrylamides; N-vinyl-2-pyrrolidone, etc. The copolymerizable monomer units constituting the polymer blocks (A) may be from one or more of these copolymerizable monomers. Of those, preferred are the units derived from methyl acrylate, methyl methacrylate, styrene, and acrylonitrile.

The polymer blocks (B) constituting the block copolymer (III) for use in the invention comprise from 0.1 to 100 mol%, preferably from 0.1 to 50 mol%, more preferably from 0.1 to 30 mol%, relative to all structural units constituting the polymer blocks (B), of units of a vinylic monomer having at least one functional group selected from a carboxyl group, an epoxy group, a hydroxyl group, a carboxylic anhydride group, and a group of the following general formula (1): 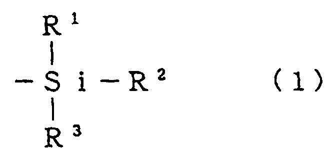 wherein R¹, R² and R³ each represent a halogen atom, a vinyl group, an alkyl group or an alkoxyl group.

The halogen atom for R¹ to R³ in formula (1) includes, for example, a fluorine atom, a chlorine atom, a bromine atom and an iodine atom. Of those, preferred is a chlorine atom.

The alkyl group for R¹ to R³ in formula (1) includes, for example, a methyl group, an ethyl group, a propyl group, an isopropyl group, an n-butyl group, an isobutyl group, a t-butyl group, a s-butyl group, a 1-methylbutyl group, a n-pentyl group, an isopentyl group, a neopentyl group, a t-pentyl group, a hexyl group, a heptyl group, a 1-methylheptyl group, an octyl group, a nonyl group, etc. Of those, preferred are alkyl groups with from 1 to 6 carbon atoms, and more preferred are alkyl groups with from 1 to 4 carbon atoms.

The alkoxyl group for R¹ to R³ in formula (1) includes, for example, a methoxy group, an ethoxy group, a propoxy group, an isopropoxy group, a butoxy group, an isobutoxy group, a s-butoxy group, a t-butoxy group, a pentyloxy group, a phenoxy group, a benzyloxy group, etc. Of those, preferred are alkoxyl groups with from 1 to 6 carbon atoms, and more preferred are alkoxyl groups with from 1 to 4 carbon atoms.

The carboxyl group-having vinylic monomer units include, for example, units derived from acrylic acid, methacrylic acid, crotonic acid, cinnamic acid, itaconic acid, maleic acid, etc. The carboxyl group-having vinylic monomer units constituting the polymer blocks (B) may be from one or more of these acids. Of those, preferred are the units derived from acrylic acid, methacrylic acid and maleic acid.

The epoxy group-having vinylic monomer units include, for example, units derived from glycidyl acrylate, glycidyl methacrylate, glycidyl itaconate, allylglycidyl ether, 2-methylallylglycidyl ether, styrene-p-glycidyl ether, 3,4-epoxybutene, 3,4-epoxy-3-methyl-1-butene, 3,4-epoxy-3-methyl-1-pentene, 5,6-epoxy-1-hexene, vinylcyclohexene monoxide, p-glycidylstyrene, etc. The epoxy group-having vinylic monomer units constituting the polymer blocks (B) may be from one or more of these monomers. Of those, preferred are the units derived from glycidyl acrylate and glycidyl methacrylate.

The hydroxyl group-having vinylic monomer units include, for example, units derived from 2-hydroxyethyl methacrylate, 2-hydroxyethyl acrylate, N-methylolacrylamide, N-methylolmethacrylamide, ethylene glycol acrylate, etc. The hydroxyl group-having vinylic monomer units constituting the polymer blocks (B) may be from one or more of these monomers.

The carboxylic anhydride group (-CO-O-CO-)-having vinylic monomer units include, for example, units derived from maleic anhydride, itaconic anhydride, citraconic anhydride, butenylsuccinic anhydride, tetrahydrophthalic anhydride, etc. The carboxylic anhydride group-having vinylic monomer units constituting the polymer blocks (B) may be from one or more of these monomers. Of those, preferred is the unit derived from maleic anhydride.

The vinylic monomer units having a group of formula (1) include, for example, units derived from 3-acryloxypropyltrichlorosilane, 3-acryloxypropyltrimethoxysilane, methacryloxypropenyltrimethoxysilane, methacryloxypropylbis(trimethylsiloxy)methylsilane, methacryloxypropyldimethylchlorosilane, 3-methacryloxypropyldimethylethoxysilane, 3-methacryloxypropylmethyldiethoxysilane, 3-methacryloxypropylpentamethyldisilane, 3-methacryloxypropyltrichlorosilane, γ-methacryloxypropyltrimethoxysilane, γ-methacryloxypropyltris(trimethylsiloxy)silane, 3-methacryloxypropyltris(trimethylsiloxy)silane, 3-methacryloxypropyltris(vinyldimethylsiloxy)silane, vinyltrimethoxysilane, vinyltriethoxysilane, vinyldimethylmethoxysilane, vinyldimethylethoxysilane, vinylethyldichlorosilane, vinylmethylbis(trimethylsiloxy)silane, vinylmethyldichlorosilane, vinylmethyldiethoxysilane, vinyloxytrimethylsilane, vinyltrichlorosilane, vinyltriethoxysilane, vinyltriethylsilane, vinyltrimethoxysilane, vinyltrimethylsilane, vinyltriphenoxysilane, vinyltriisopropoxysilane, vinyltris(2-methoxyethoxy)silane, vinyltris(trimethoxysiloxy)silane, etc. The vinylic monomer units having the group of formula (1) and constituting the polymer blocks (B) may be from one or more of these monomers.

The polymer blocks (B) may optionally contain units of a vinylic monomer capable of copolymerizing with the functional group-having vinylic monomer noted above, in a ratio of from 0 to 99.9 mol%, preferably from 50 to 99.9 mol%, more preferably from 70 to 99.9 mol%. Units of the vinylic monomer capable of copolymerizing with the functional group-having vinylic monomer as above include, for example, those derived from styrenic monomers such as styrene, p-styrenesulfonic acid and its sodium salts and potassium salts, etc.; (meth)acrylonitriles; vinyl esters such as vinyl acetate, vinyl pivalate, etc.; (meth)acrylates such as methyl (meth)acrylate, ethyl (meth)acrylate, butyl (meth)acrylate, dodecyl (meth)acrylate, 2-ethylbexyl (meth)acrylate, etc.; (math)acrylamides; N-vinyl-2-pyrrolidone, etc. The copolymerizable monomer units constituting the polymer blocks (B) may be from one or more of these copolymerizable monomers. Of those, preferred are the units derived from methyl (meth)acrylate, ethyl (meth)methacrylate, butyl (meth)acrylate, styrene, and acrylonitrile.

The polymer blocks (A) preferably have a number-average molecular weight of from 1,000 to 100,000, more preferably from 2,500 to 50,000. The polymer blocks (B) preferably have a number-average molecular weight of from 1,000 to 100,000, more preferably from 2,500 to 50,000. The block copolymer (III) preferably has a number-average molecular weight of from 2,000 to 200,000, more preferably from 5,000 to 100,000 in total. In the flame-retardant resin composition in which the polymer blocks (A) and the polymer blocks (B) constituting the block copolymer (III) and even the block copolymer (III) in total satisfy the above-defined ranges for their number-average molecular weight, the dispersibility of the polyolefinic resin (I) and the component (II) of aluminium hydroxide and/or magnesium hydroxide is improved with the result that the resin composition could have better flame retardancy, mechanical properties and melt moldability. The number-average molecular weight as referred to herein is obtained through gel permeation chromatography (GPC) based on a standard polystyrene calibration curve.

The method for preparing the block copolymer (III) is not specifically defined. Preferably, for example, a monomer component for polymer blocks (B) may be polymerized in a mode of radical polymerization in the presence of polymer blocks (A) as hemi-terminated with a mercapto group for preparing the block copolymer (III). According to the preferred method, block copolymers having the intended number-average molecular weight and molecular weight distribution can be prepared efficiently in a simplified manner.

Mercapto-terminated olefinic polymer blocks (A) can be produced in various methods. For example, any of thio-S-acetic acid, thio-S-benzoic acid, thio-S-propionic acid, thio-S-butyric acid or thio-S-valeric acid is added to a polyolefinic polymer having a double bond at its end, and the resulting polymer adduct is processed with acid or alkali; or a polyolefin is produced through anionic polymerization in which ethylene sulfide or the like is used as a terminator.

The flame-retardant resin composition of the invention is obtained by adding the component (II), aluminium hydroxide and/or magnesium hydroxide, and the block copolymer (III) to the polyolefinic resin (I). In the resin composition, the amount of the component (II), aluminium hydroxide and/or magnesium hydroxide, is from 50 to 300 parts by weight, preferably from 100 to 250 parts by weight, as the case may be, more preferably from 160 to 250 parts by weight, relative to 100 parts by weight of the polyolefinic resin (I) therein. If the amount of the component (II), aluminium hydroxide and/or magnesium hydroxide in the resin composition is smaller than 50 parts by weight, the flame retardancy of the composition is not good. On the other hand, if the amount of the component (II), aluminium hydroxide and/or magnesium hydroxide is larger than 300 parts by weight, the melt moldability and the mechanical properties of the composition are not good. The amount of the block copolymer (III) in the resin composition is from 0.1 to 100 parts by weight, preferably from 1 to 50 parts by weight, relative to 100 parts by weight of the polyolefinic resin (I) therein. If the amount of the block copolymer (III) is larger than 100 parts by weight, the mechanical properties and the heat resistance of the resin composition are not good. On the other hand, if the amount of the block copolymer (III) is smaller than 0.1 parts by weight, the melt moldability and the mechanical properties of the resin composition are not good.

The flame-retardant resin composition of the invention may further contain, if desired, any of halogen-containing flame retardants and phosphorus-containing flame retardants. The halogen-containing flame retardants include, for example, decabromodiphenyl ether, tetrabromobisphenol A, octabromodiphenyl ether, chloroparaffins, perchlorocyclopentadecane, etc. As a promoter for improving the flame retardancy of those halogen-containing flame retardants, any of antimony trioxide, antimony pentoxide or the like may be added to the resin composition. The phosphorus-containing flame retardants include, for example, red phosphorus; aromatic phosphates such as tricresyl phosphate, triphenyl phosphate, cresyldiphenyl phosphate, etc.; aliphatic phosphates such as triallyl phosphate, trixylyl phosphate, trimethyl phosphate, triethyl phosphate, dimethylethyl phosphate, diethylmethyl phosphate, etc.; halogenophosphates such as tris(chloroethyl) phosphate, tris(chloropropyl) phosphate, tris(dichloropropyl) phosphate, tris(dibromophenyl) phosphate, tris(tribromophenyl) phosphate, etc.

If still desired, the flame-retardant resin composition of the invention may further contain, in addition to the compounds mentioned above, various additives such as inorganic fillers, pigments, antioxidants, thermal deterioration inhibitors, UV absorbents, processing assistants, lubricants, foaming agents, etc.; as well as other resins capable of further improving the impact resistance of the olefinic resin (I), such as MBS resins, rubber-reinforced styrene resins (HIPS), thermoplastic elastomers, various types of rubber, etc. What is more, the resin composition may further contain, in addition to the compounds mentioned above, styrenic resins such as polystyrene resins, acrylonitrile-styrene resins, acrylonitrile-butadiene-styrene resins, etc.; chlorine-containing vinylic resins such as polyvinyl chlorides, polyvinylidene chlorides, vinyl chloride-vinyl acetate copolymers, ethylene-vinyl chloride copolymers, etc.; (meth)acrylic resins such as poly(meth)acrylates, methyl (meth)acrylate-styrene copolymers (MS resins), etc.; polycarbonate resins such as polycarbonates, polyester-polycarbonates, etc.; polyester resins such as polyethylene terephthalates, polybutylene terephthalates, polyethylene naphthalates, polybutylene naphthalates, etc.; polyamide resins such as nylon 6, nylon 66, nylon 12, semiaromatic polyamides comprising aliphatic diamine units and aromatic dicarboxylic acid units, etc., so far as they do not interfere with the effect of the invention.

The flame-retardant resin composition of the invention may be produced by melt-blending the polyolefinic resin (I), the component (II), aluminium hydroxide and/or magnesium hydroxide, and the block copolymer (III), and optionally the other components mentioned above, in any ordinary manner. For example, they may be kneaded in melt in a melt kneader, such as a single-screw extruder, a twin-screw extruder, a Brabender mixer, a Banbury mixer, a calender roll, etc. As the case may be, the component (II) aluminium hydroxide and/or magnesium hydroxide may be mixed with a solution of the block copolymer (III), then dried, and thereafter kneaded with the polyolefinic resin (I) in melt. In this manner, the flame-retardant resin composition produced has the advantage of better dispersibility.

The flame-retardant resin composition of the invention can be readily molded in melt into various shapes of flame-retardant materials. For example, it may be smoothly molded in any desired molding method of extrusion, calendering, injection or the like into various flame-retardant materials of films, sheets, moldings, etc.

The flame-retardant materials of the invention have many applications requiring flame retardancy, and are favorably used, for example, as cable coating materials, electric insulators, constructional gaskets, constructional partitions, floors, walls, car parts, etc.

The invention is described in detail hereinunder with reference to the following Examples, which, however, are not intended to restrict the scope of the invention. In the following Examples and Comparative Examples, the tensile strength, the tensile elongation, the oxygen index, and the melt moldability of the samples were measured and evaluated according to the methods mentioned below.

### [Tensile Strength, Tensile Elongation]

Measured according to JIS K 6301.

### [Oxygen Index]

Measured according to JIS K 7210. Samples having a higher oxygen index have better flame retardancy.

### [Melt Moldability]

A sample to be tested was extruded in melt through a twin-screw extruder into sheets having a size of 10 cm × 10 cm × 1 mm, and their surface condition was macroscopically observed. The sheets having a smooth surface with neither streaks nor spots thereon were evaluated good with "O"; those with smaller than 5 streaks or spots were evaluated average with "△"; and those with 5 or more streaks or spots were evaluated bad with "X".

### 〈Reference Example 1〉

### [Production of block copolymer (III-1) (polyethylene block-ethyl acrylate/maleic anhydride block copolymer)]

(1) Polyethylene ("Hizex HD700F" from Mitsui Petroleum Polyethylene Co.) was fed into a twin-screw extruder, and melted and thermally decomposed therein at 420°C to make it have a double bond at its ends.
(2) 100 parts by weight of the polyethylene having a double bond at its ends that had been prepared in above (1), 1000 parts by weight of toluene and 30 parts by weight of thio-S-acetic acid were put into a reactor, then the reactor was fully purged with nitrogen, and thereafter 10 parts by weight of 2,2'-azobisisobutyronitrile was added thereto. In that condition, the polyethylene was reacted with the thio-S-acetic acid to thereby make it have a thioacetyl group at its ends.
(3) 60 parts by weight of the polyethylene having a thioacetyl group at its ends that had been prepared in above (2) was dissolved in a mixed solvent of 100 parts by weight of toluene and 20 parts by weight of n-butanol, to which was added 1 part by weight of an n-butanol solution of 7 % potassium hydroxide, and reacted in nitrogen at a reflux point of toluene for 6 hours, whereby the polyethylene was made to have a mercapto group at its ends.
(4) 50 parts by weight of the polyethylene having a mercapto group at its ends that had been prepared in above (3) was dissolved in 184 parts by weight of toluene, to which were added 22.5 parts by weight of ethyl acrylate and 2.5 parts by weight of maleic anhydride. Then, 1,1'-azobis(cyclohexane-1-carbonitrile) was so added thereto in nitrogen at 90°C that the polymerization rate in the system could be about 10 %/hour. In that condition, the reaction was stopped after the degree of polymerization reached 95 %. The reaction mixture was cooled, and the solvent was removed. Thus was obtained an AB-type diblock copolymer composed of polyethylene blocks (A) and ethyl acrylate/maleic anhydride blocks (B) [ethyl acrylate:maleic anhydride = 90:10 by mol]. This is hereinafter-referred to as "block copolymer (III-1)". In the block copolymer (III-1) herein obtained, the polymer blocks (A) had a number-average molecular weight of 8,200, and the polymer blocks (B) had a number-average molecular weight of 4,100. The block copolymer (III-1) had a number-average molecular weight of 12,300.

### 〈Reference Example 2〉

### [Production of block copolymer (III-2) (polyethylene block-ethyl acrylate/acrylic acid block copolymer)]

50 parts by weight of the polyethylene having a mercapto group at its ends that had been prepared in (3) in Reference Example 1 was dissolved in 184 parts by weight of toluene, to which were added 23 parts by weight of ethyl acrylate and 2 parts by weight of acrylic acid. Then, 1,1'-azobis(cyclohexane-1-carbonitrile) was so added thereto in nitrogen at 90°C that the polymerization rate in the system could be about 10%/hour. In that condition, the reaction was stopped after the degree of polymerization reached 95%. The reaction mixture was cooled, and the solvent was removed. Thus was obtained an AB-type diblock copolymer composed of polyethylene blocks (A) and ethyl acrylate/acrylic acid blocks (B) [ethyl acrylate:acrylic acid = 90:10 by mol]. This is hereinafter referred to as "block copolymer (III-2)". In the block copolymer (III-2) herein obtained, the polymer blocks (A) had a number-average molecular weight of 3,900, and the polymer blocks (B) had a number-average molecular weight of 12,100. The block copolymer (III-2) had a number-average molecular weight of 16,000.

### 〈Reference Example 3〉

### [Production of block copolymer (III-3) (polyethylene block-ethyl acrylate/2-hydroxyethyl acrylate block copolymer)]

50 parts by weight of the polyethylene having a mercapto group at its ends that had been prepared in (3) in Reference Example 1 was dissolved in 184 parts by weight of toluene, to which were added 21.9 parts by weight of ethyl acrylate and 3.1 parts by weight of 2-hydroxyethyl acrylate. Then, 1,1'-azobis(cyclohexane-1-carbonitrile) was so added thereto in nitrogen at 90°C that the polymerization rate in the system could be about 10 %/hour. In that condition, the reaction was stopped after the degree of polymerization reached 95%. The reaction mixture was cooled, and the solvent was removed. Thus was obtained an AB-type diblock copolymer composed of polyethylene blocks (A) and ethyl acrylate/2-hydroxyethyl acrylate blocks (B) [ethyl acrylate:2-hydroxyethyl acrylate = 90:10 by mol]. This is hereinafter referred to as "block copolymer (III-3)". In the block copolymer (III-3) herein obtained, the polymer blocks (A) had a number-average molecular weight of 4,000, and the polymer blocks (B) had a number-average molecular weight of 4,000. The block copolymer (III-3) had a number-average molecular weight of 8,000.

### 〈Reference Example 4〉

### [Production of block copolymer (III-4) (polyethylene block-ethyl acrylate/glycidyl acrylate block copolymer)]

50 parts by weight of the polyethylene having a mercapto group at its ends that had been prepared in (3) in Reference Example 1 was dissolved in 184 parts by weight of toluene, to which were added 22 parts by weight of ethyl acrylate and 3.0 parts by weight of glycidyl acrylate. Then, 1,1'-azobis(cyclohexane-1-carbonitrile) was so added thereto in nitrogen at 90°C that the polymerization rate in the system could be about 10 %/hour. In that condition, the reaction was stopped after the degree of polymerization reached 95 %. The reaction mixture was cooled, and the solvent was removed. Thus was obtained an AB-type diblock copolymer composed of polyethylene blocks (A) and ethyl acrylate/glycidyl acrylate blocks (B) [ethyl acrylate:glycidyl acrylate = 90:10 by mol]. This is hereinafter referred to as "block copolymer (III-4)". In the block copolymer (III-4) herein obtained, the polymer blocks (A) had a number-average molecular weight of 8,200, and the polymer blocks (B) had a number-average molecular weight of 4,400. The block copolymer (III-4) had a number-average molecular weight of 12,600.

### 〈Reference Example 5〉

### [Production of block copolymer (III-5) (polyethylene block-methyl methacrylate/γ-methacryloxypropyltrimethoxysilane block copolymer)]

50 parts by weight of the polyethylene having a mercapto group at its ends that had been prepared in (3) in Reference Example 1 was dissolved in 184 parts by weight of toluene, to which were added 19.6 parts by weight of methyl methacrylate and 5.4 parts by weight of γ-methacryloxypropyltrimethoxysilane. Then, 1,1'-azobis(cyclohexane-1-carbonitrile) was so added thereto in nitrogen at 90°C that the polymerization rate in the system could be about 10 %/hour. In that condition, the reaction was stopped after the degree of polymerization reached 95%. The reaction mixture was cooled, and the solvent was removed. Thus was obtained an AB-type diblock copolymer composed of polyethylene blocks (A) and methyl methacrylate/γ-methacryloxypropyltrimethoxysilane blocks (B) [methyl methacrylate:γ-methacryloxypropyltrimethoxysilane = 90:10 by mol]. This is hereinafter referred to as "block copolymer (III-5)". In the block copolymer (III-5) herein obtained, the polymer blocks (A) had a number-average molecular weight of 8,200, and the polymer blocks (B) had a number-average molecular weight of 3,800. The block copolymer (III-5) had a number-average molecular weight of 12,000.

### [Examples 1 to 7]

Very-low-density polyethylene ("VL200" from Sumitomo Chemical Co.; hereinafter referred to as "VLDPE) aluminium hydroxide ("Hidilight 42M" from Nippon Light Metal Co.) and/or magnesium hydroxide ("Kisuma 5B" from Kyowa Chemical Industry Co.), and one of block copolymers (III-1) to (III-5) that had been prepared in Reference Examples 1 to 5 were blended in a ratio as in Table 1 below, kneaded in melt at 190°C in a twin-screw extruder, and then extruded out therefrom into a sheet having a thickness of 1 mm. Using a #3 dumbbell, test pieces were blanked out of the sheet, and tested for their physical properties. The test data obtained are in Table 1.

### [Comparative Examples 1 and 2]

VLDPE and aluminium hydroxide ("Hidilight 42M" from Nippon Light Metal Co.) were blended in a ratio as in Table 1, kneaded in melt at 190°C in a twin-screw extruder, and then extruded out therefrom into a sheet having a thickness of 1 mm. Using a #3 dumbbell, test pieces were blanked out of the sheet, and tested for their physical properties. The test data obtained are in Table 1.

### [Comparative Example 3]

VLDPE, aluminium hydroxide ("Hidilight 42M" from Nippon Light Metal Co.) and ethylene-ethyl acrylate-maleic anhydride tercopolymer ("Bondine FX8000" from Sumitomo Chemical Co.) were blended in a ratio as in Table 1, kneaded in melt at 190°C in a twin-screw extruder, and then extruded out therefrom into a sheet having a thickness of 1 mm. Using a #3 dumbbell, test pieces were blanked out of the sheet, and tested for their physical properties. The test data obtained are in Table 1.

### [Comparative Example 4]

VLDPE, aluminium hydroxide ("Hidilight 42M" from Nippon Light Metal Co.) and the block copolymer (III-1) having been prepared in Reference Example 1 were blended in a ratio as in Table 1, kneaded in melt at 190°C in a twin-screw extruder, and then extruded out therefrom into a sheet having a thickness of 1 mm. Using a #3 dumbbell, test pieces were blanked out of the sheet, and tested for their physical properties. The test data obtained are in Table 1.

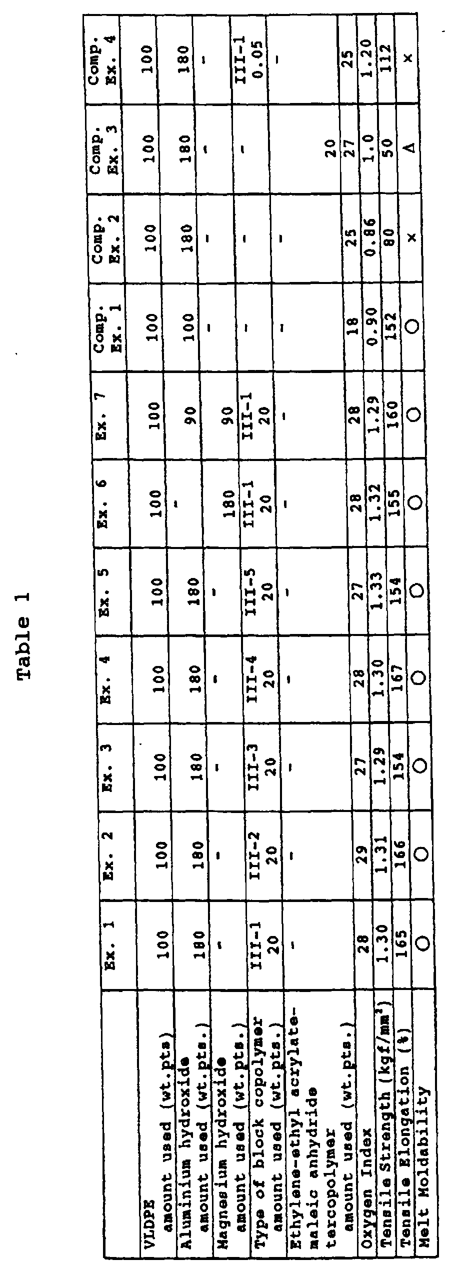

### [Examples 8 to 14]

Ethylene-ethyl acrylate copolymer ("Lexlon EEA A1150" from Nippon Petroleum Co.; hereinafter referred to as "EEA"), aluminium hydroxide ("Hidilight 42M" from Nippon Light Metal Co.) and/or magnesium hydroxide ("Kisuma 5B" from Kyowa Chemical Industry Co.), and one of block copolymers (III-1) to (III-5) that had been prepared in Reference Examples 1 to 5 were blended in a ratio as in Table 2 below, kneaded in melt at 190°C in a twin-screw extruder, and then extruded out therefrom into a sheet having a thickness of 1 mm. Using a #3 dumbbell, test pieces were blanked out of the sheet, and tested for their physical properties. The test data obtained are in Table 2.

### [Comparative Examples 5 and 6]

EEA and aluminium hydroxide ("Hidilight 42M" from Nippon Light Metal Co.) were blended in a ratio as in Table 2, kneaded in melt at 190°C in a twin-screw extruder, and then extruded out therefrom into a sheet having a thickness of 1 mm. Using a #3 dumbbell, test pieces were blanked out of the sheet, and tested for their physical properties. The test data obtained are in Table 2.

### [Comparative Example 7]

EEA, aluminium hydroxide ("Hidilight 42M" from Nippon Light Metal Co.) and ethylene-ethyl acrylate-maleic anhydride tercopolymer ("Bondine FX8000" from Sumitomo Chemical Co.) were blended in a ratio as in Table 2, kneaded in melt at 190°C in a twin-screw extruder, and then extruded out therefrom into a sheet having a thickness of 1 mm. Using a #3 dumbbell, test pieces were blanked out of the sheet, and tested for their physical properties. The test data obtained are in Table 2.

### [Comparative Example 8]

EEA, aluminium hydroxide ("Hidilight 42M" from Nippon Light Metal Co.) and the block copolymer (III-1) having been prepared in Reference Example 1 were blended in a ratio as in Table 2, kneaded in melt at 190°C in a twin-screw extruder, and then extruded out therefrom into a sheet having a thickness of 1 mm. Using a #3 dumbbell, test pieces were blanked out of the sheet, and tested for their physical properties. The test data obtained are in Table 2.

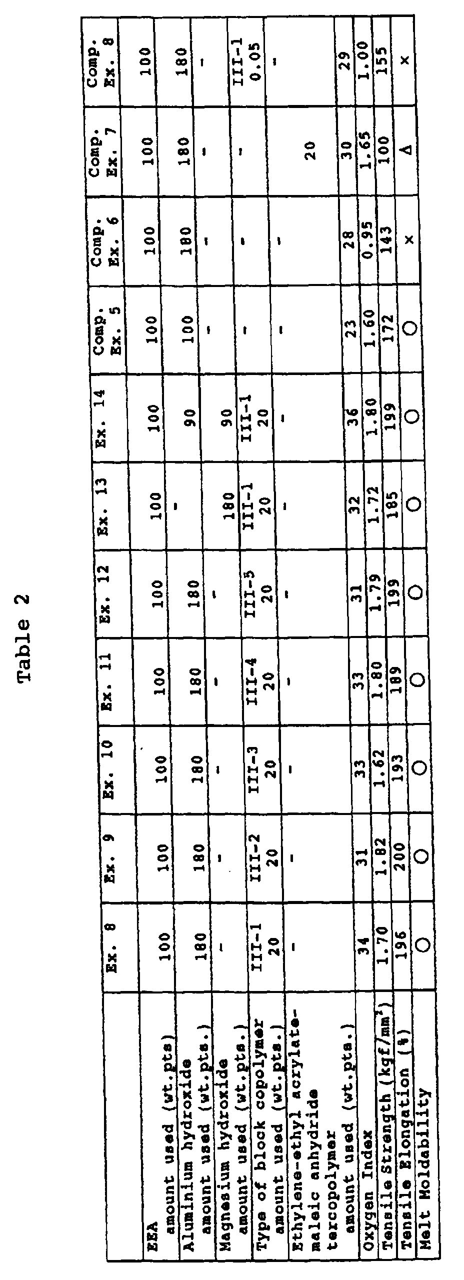

### [Examples 15 to 21]

Ethylene-octene copolymer ("Engage 8100" from Dow Chemical Co.; hereinafter referred to as "EG 8100"), aluminium hydroxide ("Hidilight 42M" from Nippon Light Metal Co.) and/or magnesium hydroxide ("Kisuma 5B" from Kyowa Chemical Industry Co.), and one of block copolymers (III-1) to (III-5) that had been prepared in Reference Examples 1 to 5 were blended in a ratio as in Table 3 below, kneaded in melt at 190°C in a twin-screw extruder, and then extruded out therefrom into a sheet having a thickness of 1 mm. Using a #3 dumbbell, test pieces were blanked out of the sheet, and tested for their physical properties. The test data obtained are in Table 3.

### [Comparative Examples 9 and 10]

EG 8100 and aluminium hydroxide ("Hidilight 42M" from Nippon Light Metal Co.) were blended in a ratio as in Table 3, kneaded in melt at 190°C in a twin-screw extruder, and then extruded out therefrom into a sheet having a thickness of 1 mm. Using a #3 dumbbell, test pieces were blanked out of the sheet, and tested for their physical properties. The test data obtained are in Table 3.

### [Comparative Example 11]

EG 8100, aluminium hydroxide ("Hidilight 42M" from Nippon Light Metal Co.) and ethylene-ethyl acrylate-maleic anhydride tercopolymer ("Bondine FX8000" from Sumitomo Chemical Co.) were blended in a ratio as in Table 3, kneaded in melt at 190°C in a twin-screw extruder, and then extruded out therefrom into a sheet having a thickness of 1 mm. Using a #3 dumbbell, test pieces were blanked out of the sheet, and tested for their physical properties. The test data obtained are in Table 3.

### [Comparative Example 12]

EG 8100, aluminium hydroxide ("Hidilight 42M" from Nippon Light Metal Co.) and the block copolymer (III-1) having been prepared in Reference Example 1 were blended in a ratio as in Table 3, kneaded in melt at 190°C in a twin-screw extruder, and then extruded out therefrom into a sheet having a thickness of 1 mm. Using a #3 dumbbell, test pieces were blanked out of the sheet, and tested for their physical properties. The test data obtained are in Table 3.

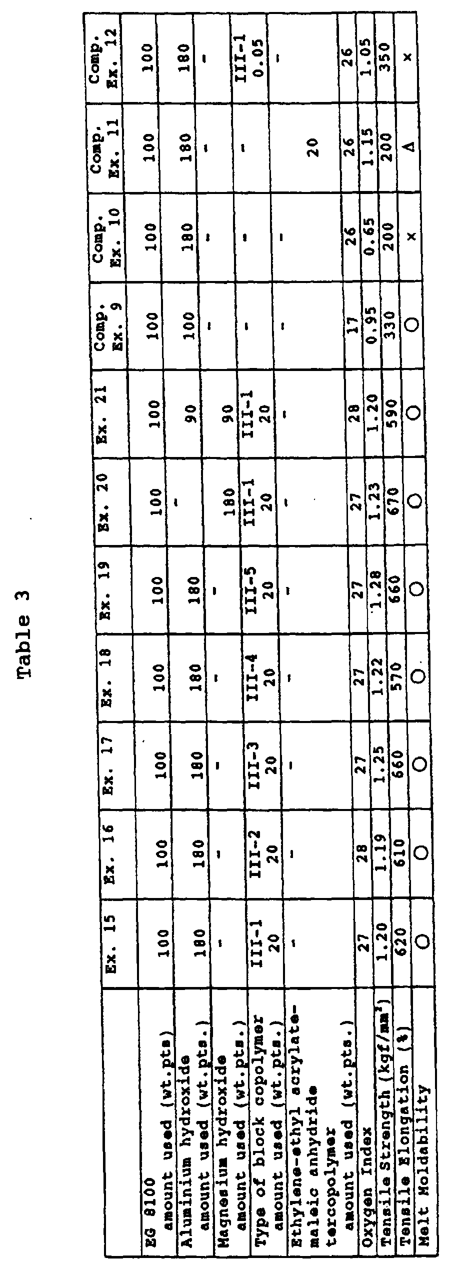

### INDUSTRIAL APPLICABILITY

The flame-retardant resin composition of the invention has the advantages of good melt moldability, good flame retardancy and good mechanical properties; and the flame-retardant materials as obtained by melt-molding the flame-retardant resin composition have many applications requiring flame retardancy, and are favorably used as cable coating materials, electric insulators, constructional gaskets, constructional partitions, floors, walls, car parts, etc.

## Claims

1. A flame-retardant resin composition comprising 100 parts by weight of (I) a polyolefinic resin, from 50 to 300 parts by weight of (II) aluminium hydroxide and/or magnesium hydroxide, and from 0.1 to 100 parts by weight of (III) a block copolymer composed of (A) polymer blocks comprising from 50 to 100 mol% units of an olefinic monomer and from 0 to 50 mol% units of a vinylic monomer capable of copolymerizing with said olefinic monomer, and (B) polymer blocks comprising from 0.1 to 100 mol% units of a vinylic monomer having at least one functional group selected from a carboxyl group, an epoxy group, a hydroxyl group, a carboxylic anhydride group, and a group of the following general formula (1): 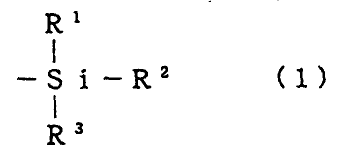 wherein R¹, R² and R³ each represent a halogen atom, a vinyl group, an alkyl group or an alkoxyl group,
and from 0 to 99.9 mol% units of a vinylic monomer capable of copolymerizing with said monomer.

2. Flame-retardant materials as produced by melt-molding the flame-retardant resin composition of claim 1.
